# EUROPEAN PATENT APPLICATION

(11) **EP 2 252 125 A1**
(43) Date of publication of application: **17.11.2010**
(21) Application number: 10162894.9
(22) Date of filing: 14.05.2010
(51) Int. Cl.: H04W 72/04, H04W 84/18

(54) **Method for forming a multichannel broadband wireless network with a hierarchical tree structure**

(30) Priority: 14.05.2009 IT TO20090377
(71) Applicant: Selex Communications S.p.A., Genova (IT)
(72) Inventor: Mando, Gianluca, 50134 Firenze (IT)
(74) Representative: Jorio, Paolo

(57) **Abstract**

The forming method applies to a multichannel broad-band wireless network with hierarchical tree structure including a plurality of nodes, one whereof is configured as gateway node that enables connection with external networks. All the nodes of the network have a first, a second, and a third connection interfaces. For non-gateway nodes, the first interface operates as a controlled-mode interface, configured to connect to a parent node; the second interface operates as a control-mode left-hand interface, configured to connect to just one left-hand child node of the plurality of nodes; and the third interface operates as a control-mode right-hand interface, configured to connect to just one right-hand child node of the plurality of nodes. Each second interface and third interface sends beacon messages including information identifying the depth of the node in the network and the right-hand position or left-hand position of the respective interface.

## Description

The present invention relates to a method for forming a multi-channel broadband wireless network with a hierarchical tree structure.

As is known, it is frequently necessary to be able to create rapidly and effectively wireless communication networks capable of covering a wide surface, minimizing the problems of interference.

To this end, various single-channel algorithms have been proposed, which are affected by serious interference problems.

The assignment of the channels on a mesh network, with the purpose of minimizing the interference between two links of a same network is a theme on which a new and active line of research is developing.

The problem of assignment of the channel, from a theoretical standpoint, remains unresolved, other than by partial solutions or solutions that rely upon heuristics not applicable to all contexts, sine the theoretical implications of the problem are particularly difficult to tackle.

From a general standpoint, the problem of choosing the channels on a mesh network can be equated to one of the variants of the theoretical problem of colouring of a graph. This problem is well known in the literature, and can be described as follows: given a graph, and a finite set of colours, associating each arc of the graph to a colour taken from the set available so that there no node of the network is connected with two arcs of the same colour. In the practical framework of mesh networks, each arc is a link, and each colour is a channel; in this way, it is guaranteed that each node does not possess two links on the same frequency, and thus two links that interfere.

Some clarifications are necessary:
- the best algorithm for solving the problem of graph colouring has proven to be NP-complete; thus there does not exist an efficient algorithm for finding a solution; moreover, a solution to the problem not always exists;
- the model of graph colouring does not describe effectively the problem in all its aspects; a node can cause interference also towards another node with which it does not share any link, if they are linked to a same node (problem of the hidden node);
- the algorithms of graph colouring presuppose an *a priori* knowledge of the entire graph and act as a centralized entity; in a mesh network it is not possible to make an assumption of this type, but the algorithm would have to function in a distributed and co-operational way between the nodes;
- once a solution has been found, the assignment of the colours to the arcs is not independent, but changing the colour of just one arc can imply a reconfiguration of other arcs of the graph; in other words, once a solution has been found for a given graph, this does not necessarily mean that finding a solution for the same graph that is slightly modified (for example, on account of the loss of a link) is easier than finding one starting from scratch.

In addition, the reassignment of a channel cannot be carried out in an efficient way using the information possessed by a single node, because there is always a risk of producing the effect of the hidden node.

Starting from these bases, articles in the literature present particular solutions that can be applied in limited contexts or that envisage major interventions on the MAC layer. For example, the article "Centralized Channel Assignment and Routing Algorithms for Multi-channel Wireless Mesh Networks", A. Raniwala, K. Gopalan, Prof. Chiueh, ACM Mobile Computing and Communications Review (MC2R) Vol. 8, No. 2, April 2004, introduces a centralized algorithm for assignment of the channels in mesh networks. In a subsequent article also the possibility of providing a distributed variant thereof is introduced, but with a considerable increase in complexity. Other techniques concentrate on the assignment of a group of channels in which each network board is linked always to a same channel, and on the use of techniques for the decision of the link to be used for each packet (see "Routing in multiradio, multi-hop wireless mesh networks", R. Draves, J. Padhye, B. Zill, Proceedings of the 10th Annual International Conference on Mobile Computing and Networking), or on heuristics based upon the data of a limited part of the network ("Distributed Channel Assignment and Routing in Multiradio Multi-channel Multi-hop Wireless Networks", H. Wu, F. Yang, K. Tan, J. Chen, Q. Zhang, Z. Zhang, IEEE Journal on Selected Areas in Communications).

The aim of the present invention is to provide a method that overcomes the disadvantages of the known solutions.

According to the present invention, a method for forming a multichannel broadband wireless network with a hierarchical tree structure and a respective node are provided, as defined, respectively, in claims 1 and 15.

The invention will now be described with reference to the attached drawings, which illustrate a non-limiting embodiment thereof, and wherein:
Figure 1 presents a scheme regarding the structure of the network that can be obtained with the present method;
Figure 2 shows the simplified block diagram of one of the nodes of the network of Figure 1;
Figures 3 and 3a show a flowchart of the present method;
Figures 4 and 5 show the construction of the node identifiers and of the addresses of the interfaces of the network of Figure 1; and
Figure 6 shows the simplified structure of a message used with the present method.

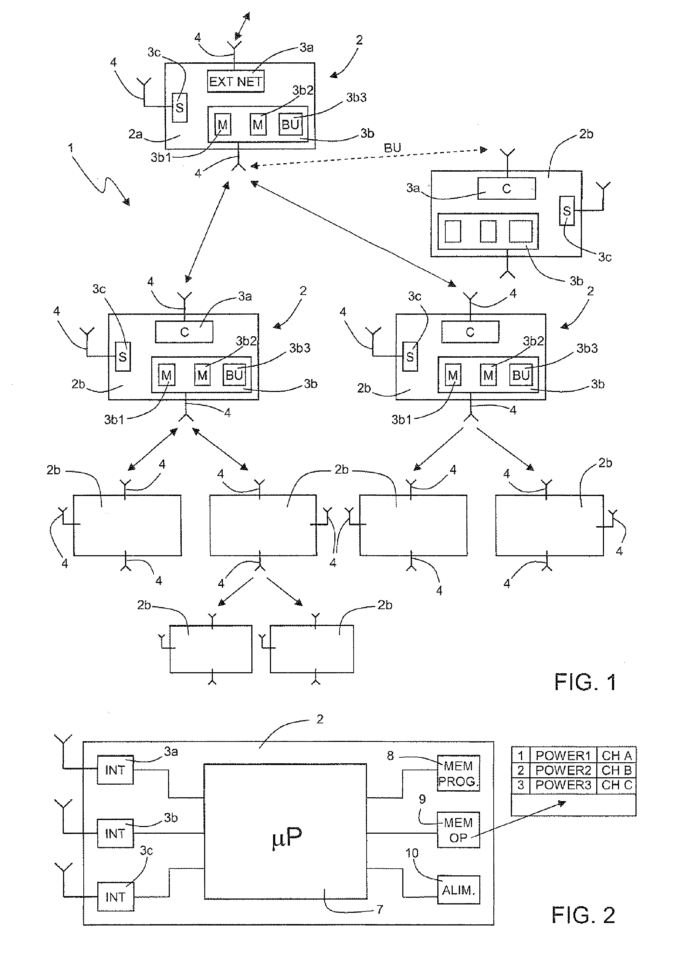

Figure 1 shows the structure of a backbone network 1 that can be obtained with the method forming the subject of the present invention.

In detail, the network 1 comprises a plurality of nodes 2 that are structurally the same as one another, but are configured differently, so that one of them, hereinafter referred to as gateway node G 2a, provides accessibility towards external networks, whereas the other nodes, hereinafter referred to as non-gateway nodes NG 2b, have the purpose of creating a mesh that covers the largest possible surface.

The nodes 2 are formed by multi-interface wireless routers and precisely have at least three interface boards 3 linked each to an own antenna 4. In the case of the gateway node 2a, a first board 3a can be used, if required, for access to/from an external network (board EXT NET), a second board 3b is used for the standard connection to, at the most, two children nodes 2b in master M mode (access point) and for the emergency connection (backup BU), as explained in detail hereinafter; a third board 3c is used as service board S for providing a network access service to various devices (personal computers, PDAs, wi-fi cellphones, video cameras, etc.). In the nodes NG 2b, the first board 3a is used in slave mode (client board C), for connection to a hierarchically higher respective node 2 (parent node, which can be the gateway node 2a or another node NG 2b), the second board 3b is used in master mode (access point) for connection to, at the most, another two nodes NG 2b and for the backup functions; the third board 3c is available for providing the network access service.

In detail, each second board 3b is divided into three virtual interfaces 3b1, 3b2 and 3b3, for connection to two hierarchically lower nodes NG 2b (a node NG 2b, which is child to each of the interfaces 3b1 and 3b2) and for the backup functions. Alternatively, if the nodes 2 are provided with four interface boards 3, one of these boards operates in slave mode, another of said boards operates in master mode and forms two virtual interfaces that can be each connected to a single node, precisely the node NG 2b, a third board is available for providing the service, and the backup function is implemented by the fourth board.

The interface boards 3a and 3b are 5.4-GHz WLAN boards, operating according to the IEEE 802.11a standard, and the interface board 3c is a 2.4-GHz WLAN board.

Each node 2 has the structure shown in a simplified way in Figure 2, which comprises, in addition to the interfaces 3, a microprocessor 7, a program memory 8, an operative memory 9 (which stores, among other things, the settings corresponding to the G or NG function of the node 2) and a supply unit 10.

In the present network 1, the gateway node 2a splits the network 1 into two branchs, a right-hand one and a left-hand one, to which it associates different channels. For example, the gateway node 2a can associate to the right-hand subnetwork even channels, and to the left-hand subnetwork odd channels. In addition, since also each child node 2b can be linked to just two children nodes, the network 1 has a binary-tree shape.

Each node 2 is attributed a depth level, starting from 0 for the gateway node and incrementing by one for each successive level. In this way, the at the most two children nodes 2b directly connected to the gateway node 2a are at depth level 1, the next at the most four children nodes 2b are at the depth level 2, etc.

In the network 1, each activated node 2 sends, through its own master mode interface 3b, beacon messages in which it specifies its own depth level and supplies a dynamic IP address. Each node that switches on in non-gateway mode starts a scan with its own first board 3a for detecting the presence of the beacon sent by the gateway node 2a and/or by the children nodes 2b that are already active and attempts to connect to one of these. Since each node 2b can connect, in master mode, to just two children nodes (slaves) 2b, the search for the parent node by the node 2b that has just switched on proceeds until the latter finds a parent node having a board in master mode that is free. The result of the scan is then used also for choosing the freest (i.e., the least interferred) channels on which to set its own logic master mode interfaces 3b1 and 3b2 and backup mode interface 3b3. Preferably, the node chooses two free channels higher than the one used by the parent as regards the master mode interfaces 3b1, 3b2. As regards the backup mode interface 3b3, it uses the same channel as the virtual interfaces 3b1, 3b2, when the node 2 has just three interface boards 3, or else uses an appropriate channel, which is also higher than the one used by the parent, when the node 2 has four interface boards 3. In this way, going down the tree, channels with higher index are used. Once the bottom of the list of the channels that can be used has been reached, the nodes 2 start again from the first channel.

The same procedure described above is activated also when a node NG 2b loses the previously set link; in this case, the node NG 2b looks for a new link irrespective of the previous link and again sets the channels available for its own interfaces in master mode. In addition, the node NG 2b that links again to the network modifies its own dynamic IP address on the basis of the new parent node to which it has connected. The addresses thus change dynamically as the position of each node 2b within the network 1 varies.

If the node that switches on or that has lost the previous link does not find possible parent nodes having available master mode interfaces 3b1 or 3b2, it connects to a backup interface 3b3. The backup mode interfaces 3b3, which have an own identifier, do not any have limits of simultaneously connected clients (childs), thus enabling in any case connection to a visible child node, even in the absence of available master mode interfaces 3b1, 3b2. In this case, the available bandwidth (54 Mbps gross) is shared among all the childs, according to the MAC CSMA/CA protocol.

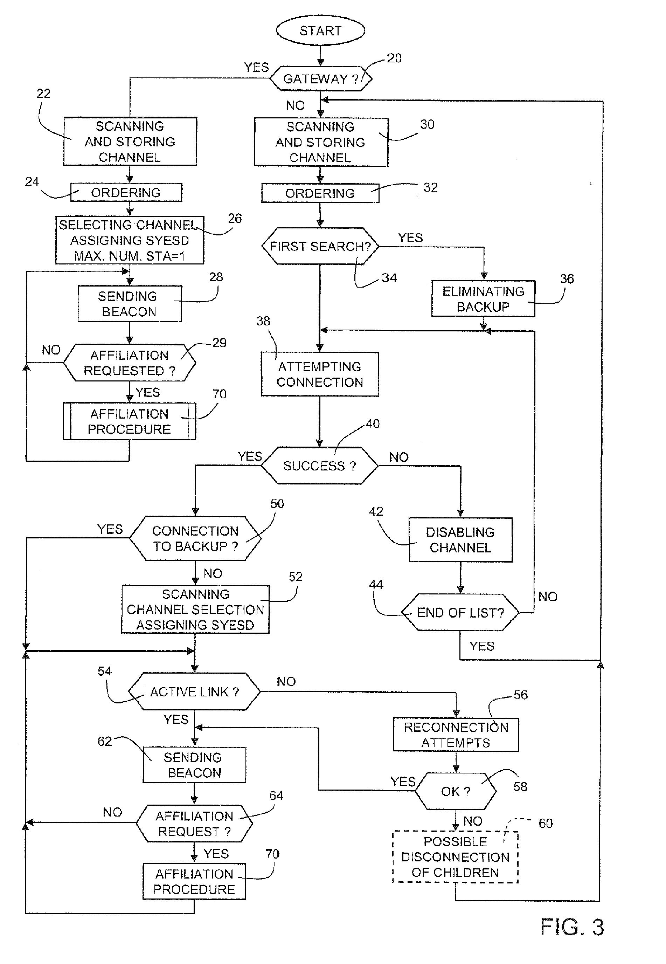

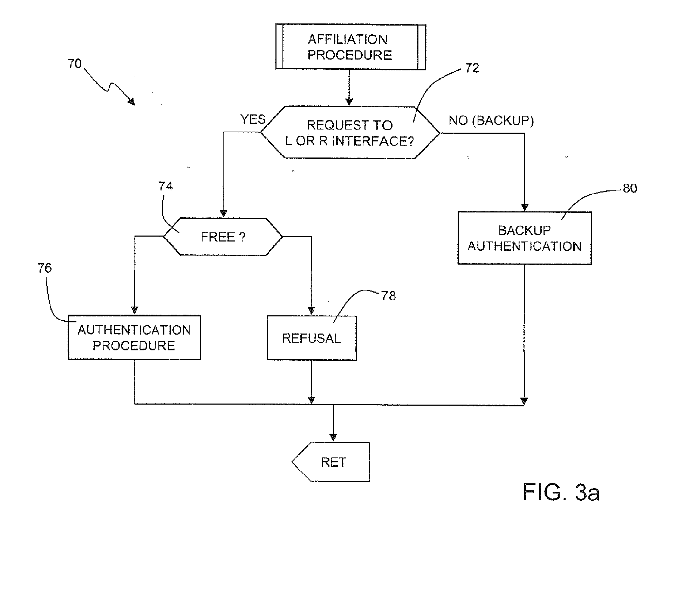

The procedure followed by the nodes 2 upon switching-on is described hereinafter, with reference to the algorithm of Figure 3.

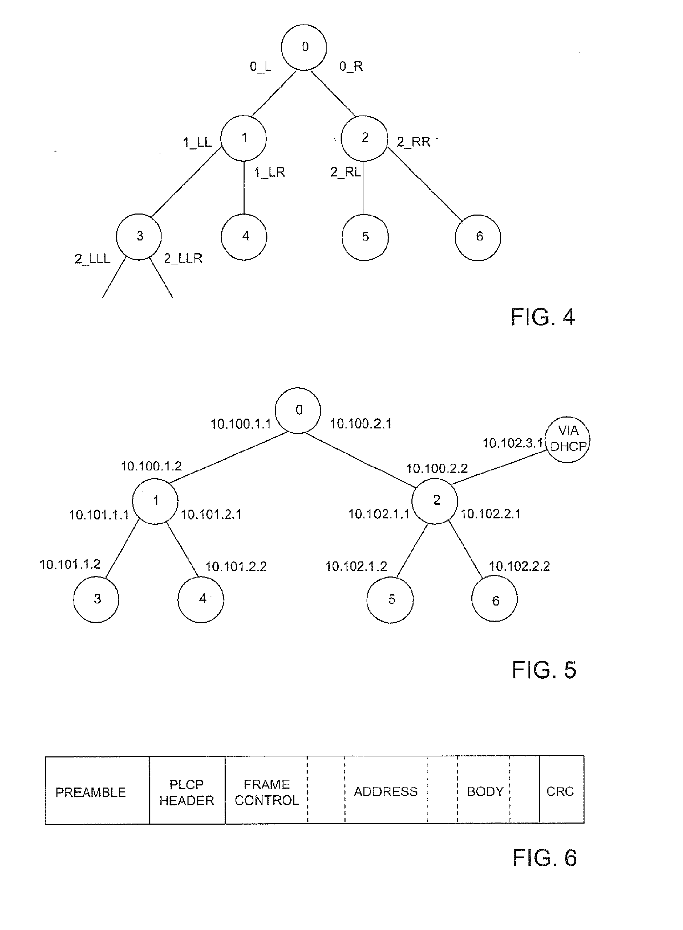

Initially, the node 2 that has switched on verifies whether it has been activated in gateway mode G (step 20). If so, the node 2 is activated in gateway mode (gateway node 2a), scans the free channels, and stores the detected channels in a table (step 22). For example, the table can have the structure shown in Figure 2, including an ordering index, a detected power field, and an associated channel field. Then, the gateway node 2a orders the active channels detected on the basis of their power received (ranking) (step 24) so as to reduce interference with external networks. It chooses the communication channel with least interference and generates service-set identifiers (SSIDs) for its own master mode interfaces 3b1, 3b2 on the basis of its own depth level in the network (here, equal to 0) and to whether the interfaces refer to the left-hand branch L, to the right-hand branch R, or to the backup interface, as explained in greater detail hereinafter (step 26). In addition, the gateway node 2a configures the parameters corresponding to its own master mode interfaces 3b1, 3b2 so as to set to "1" the maximum number of associatable children nodes (MAX_N_STA=1). Then, the interfaces 3b1, 3b2 and 3b3 start to periodically send their own beacons, in accordance with the IEEE 802.11 standard (step 28). For this purpose, a message is sent having, for example, the structure represented in Figure 6, which contains a preamble field, including synchronization information; a PLCP header field, used by the physical layer of the nodes 2 for decoding the message; a MAC field, formed by multiple information, among which the message type (here corresponding to "beacon") and the MAC address of the transmitter interfaces 3b1, 3b2 and 3b3; and a CRC field for error detection/correction.

In addition, the gateway node 2a continuously verifies the arrival of requests for affiliation (step 29). Upon detection of a request (output YES from step 29), the gateway node 2a activates an affiliation procedure 70, described hereinafter with reference to Figure 3a.

If the node 2 just switched on is not activated in gateway mode (node NG 2b) (output NO from step 20), the node scans, through its own client mode (slave) interface 3a, to look for active channels in its own sensitivity range, stores the found active channels (step 30), and orders these channels on the basis of the detected power and/or the position within the network 1 of the node that includes this master mode interface 3b (for example, by setting in a higher position the nodes from which it has received a better signal and that have a lower depth level or else using a node identifier, described hereinafter) (step 32).

If the scan is carried out for the first time (output YES from step 34), the node 2b eliminates from the table the detected channels that are associated to backup interfaces 3c (step 36), and then attempts a connection (step 38). Instead, if the scan is not the first (output NO from step 34), the node 2b passes directly to the attempt at connection 38. To this end, the node 2b selects the first channel in the list and sends an authentication message to the interface associated to this channel, using any one of the security protocols envisaged according to the IEEE 802.11 and IEEE 802.11a standards, such as WEP, WPA, WPA2, WPA/WPA2-RADIUS, based upon exchange of keys or certificates, by indicating also the identifier of the master mode interface 3b associated to the selected channel.

If the node 2b does not manage to connect to the selected channel (output NO from step 40), for example because the associated interface is already occupied and/or no reply is received within a preset time (for example, five seconds), the node 2b disables the previously selected channel (step 42), verifies whether there still exist channels in the list on which to carry out the attempt at connection (step 44), and, if so, tries to connect on a channel subsequent to the previous one in the list, returning to step 38. Instead, if the node 2b that is carrying out the search has reached the last channel present in the list (output YES from step 44), the node 2b performs a new scan, returning to step 30. In the subsequent search, the node 2b includes also the backup interfaces, skipping step 36.

If the node 2b receives a positive reply from the node associated to the selected channel (possible parent node) (output YES from step 40), and the corresponding interface is in master mode (output YES from step 50), the node 2b carries out a new scan to identify the free channels, sets its own interfaces 3b1, 3b2 and 3b3 on a free channel and assigns the identifiers to the interfaces 3b (step 52), in the way described hereinafter. The node 2b chooses, from the free channels, a channel higher than the channel used by the parent node, also taking into account whether the node 2b in question is in the right-hand branch (in which, as indicated above, the even channels are preferably used) or in the left-hand branch (odd channels).

The chosen identifiers (SSIDs of the 802.11 protocol) are of the type X/_L, X/_R and X/_BU, where X is the depth of the parent node incremented by one (so that it is equal to 1 for the children nodes 2b linked to the gateway node 2a, equal to 2 for the children nodes 2b at the immediately subsequent level, etc.), L, R and BU identify the interface as being in left-hand master mode, in right-hand master mode, or in backup mode.

Next, as in the case of the backup link (output YES from step 50), the node 2b in question checks periodically whether its own link with the parent node is still active (step 54). In practice, if traffic has not been exchanged on the considered link, the interface in slave mode verifies that it is regularly receiving the beacon of its own parent interface (e.g., every 100 s) and, after a certain number of lost signals, acknowledges loss of the link. Instead, if traffic is exchanged, the link is declared lost in the case of failure to receive packets after a preset timeout.

If the link is lost (output NO from step 54), the node carries out some attempts of recovery of the link (step 56), carrying out new attempts of association and authentication as described above with reference to step 38. If this attempt is not successful (output NO from step 58), the node, if it is not connected to a backup mode interface 3b3, sends a command for de-activating its own master mode interfaces 3b1 and 3b2 and backup mode interface 3b3, which send a corresponding disconnection message to possible connected childs (step 60), and, after a short time (e.g., one second) for enabling disconnection thereof, returns to step 30, to seek a new link, carrying out a scan for identificating the visible nodes, their ranking, etc.

If the link is active or has been re-activated during one of the attempts (outputs YES from steps 54 and 58), the node operates in standard mode, sending periodically (e.g., every 100 s) the beacon through its master and backup mode interfaces 3b1, 3b2 and 3b3, step 62, and verifying periodically the presence of the link (step 54). In addition, during standard operation, when the node receives a connection request from a node that is external to the network or that has lost the previous link with a parent node (output YES from step 64), it activates the affiliation procedure 70.

The affiliation procedure 70, shown in Figure 3a, initially comprises a check as to whether the request for affiliation has been received by one of the master mode interfaces 3b1, 3b2; if so, and if the master interface in question is still free (output YES from step 74), the authentication procedure is sent, by sending an authorization message and storing the affiliation, for example, in the operative memory 9 of Figure 2 (step 74); if not, a message of refusal is sent (step 78). Instead, if the request for affiliation is directed to the backup mode interface 3b3 (output NO from step 72), the request is accepted, a corresponding authorization message is sent, and, as envisaged by the 802.11 protocol, the interface is configured so as to take into account the total number of children nodes coming under this interface in backup mode (for example, by dividing the available band) (step 80).

As emerges clearly from the flowchart of Figure 3, the network 1 is of a dynamic type, and its tree structure is initially unforeseeable. In addition, during activity, as explained above, some children nodes 2b can lose the link with their own parent nodes 2a or 2b and activate a new link with different nodes.

Consequently, the nodes NG 2b are not able to know the IP addresses of the nodes effectively present in the network and adjacent thereto. It is thus impossible to use static routes pre-installed in the nodes. To overcome this problem, a dynamic routing protocol may be used (for example OSPF - Open Shortest Path First, even though also other dynamic protocols may be used, such as AODV), already installed in the nodes 2. As is known, this protocol uses, at the two ends of each link, two IP addresses of the same class and distinct subnetworks by different links.

For best managing the topology changes of the network, the identifier of each node and the IP addresses of the interfaces are chosen in a dynamic way and such as to include the position of the interface in question within the network. To this end, each node generates, as an identifier of its own master interfaces, an SSID that includes the value of the node depth level, the information regarding the network branch (right-hand or left-hand) to which the node belongs, and the identifier, right-hand or left-hand, corresponding to the interface (right-hand or left-hand) considered. In addition, on the basis of the SSID of the master interface to which each node is linked through its own slave mode interface 3a, the node is able to determine an own identifier, equal to a numeric value that is incremented starting from zero (gateway-node identifier).

In practice, as shown in Figure 4, the gateway node uses, for its master mode interfaces, the identifiers 0_L and 0_R. The node that connects to the gateway node, left-hand master interface (having identifier 0_L), thus knows that it is at the first depth level, left-hand child, and thus identifies its own left-hand and right-hand interfaces with the SSIDs 1_LL and 1_LR and itself with the identifier 1. In turn, the node that connects to the interface having SSID 1_LL knows that it is at the second level, left-hand child of the left-hand child of the gateway node. This level 2-node thus assigns SSIDs 2_LLL and 2_LLR to its own master interfaces and the identifier ID 3 to itself; and so forth, obtaining the numbering shown for example in Figure 4.

With this type of identifier, the IP address of the master and backup mode interfaces 3b1, 3b2, 3b3 is assigned in the following way (24-bit mask, see also Figure 5):
10.100+{node ID|parent ID}.{1|2}.{1|2}/24
where:
the first octect is fixed, for example equal to 10;
the master or backup mode interfaces 3b1, 3b2, 3b3 calculate the second octect as sum of another fixed number, for example 100, and the ID of the node in question, calculated in the way indicated above, set the third octect as 1 or 2 or 3, according to whether it is the left-hand interface, the right-hand interface, or the backup interface, and set the third byte fixed to 1;
the client (slave) mode interfaces 3a choose the second and third bytes equal to that of the master interface to which they are linked and set the fourth byte fixed to 2.

In view of the chosen assignment scheme, a network is for example obtained with the addressing shown in Figure 5. Note that nodes 2b linked to their own parent in backup mode receive therefrom an address belonging to the subnetwork via a DHCP server.

Thereby, the addressing obtained respects the conditions set previously, i.e., that the two interfaces at the ends of a link have addresses in the same class (the second and third octects are the same) and different links use different classes. Each node moreover stores with its own configuration a parameter that defines addressing of the service subnetwork (connected to the interface 3c), and that can be chosen arbitrarily, provided that it is differently from the addresses generated by the network formation method (for example using the DHCP protocol). The OSPF protocol here has the function of rerouting packets from the service network to the network 1, and vice versa.

The method for forming the described network thus enables self-configuration of the nodes in a simple and automatic way for generating a network tree structure such as to cover an extensive surface, selecting the radio channels that present lowest interference and generating an automatic IP addressing of the interfaces that takes into account the topology that has been developed. The network deployment step is thus simple and fast.

In particular, splitting the network into two branchs and associating them to even and odd channels enables a good distribution of the frequencies.

The described method moreover enables reduction of the incidence of the problem of the hidden node, which is linked to the interference that may be produced when a third node is found in the area of coverage of a first and a second nodes that are not visible to one another and use a same channel. In fact, the use of different channels in the two branchs of the network and the assignment of the channels in the network in an incremental way enable the use of different channels in different geographical areas, and thus reduce the likelihood of said event.

The described method moreover enables to solve situations when a link is lost ("fail-over"), thanks to the use of a virtual backup interface that enables emergency connection in the case where a node, that has become orphan at a certain moment, does not find visible nodes having free master mode interfaces. Scanning, with detection of the list of visible interfaces 3b and of the intensity of the received signal enables immediate evaluation of the interference degree of the different channels. For example, the interference degree is determined by calculating the normalized sum of the received power on the considered channel.

The implementation of the described method requires only minimal modifications to the MAC of the nodes 2. The additional information in the beacon corresponding to the identifiers ID of the master mode interfaces can be entered in an ad-hoc field or more simply in the name of the network.

Finally, it is clear that modifications and variations may be made to the method and to the nodes described and illustrated herein, without thereby departing from the scope of the present invention, as defined in the attached claims.

## Claims

1. A method for forming a multi-channel broadband wireless network with a hierarchical tree structure made up of a plurality of structurally equal nodes including a gateway node and at least one non-gateway node, each node of the network comprising at least one first interface, one second interface, and one third interface for connection to other nodes of the network,
the method comprising:
for a non-gateway node, configuring the first interface as a controlled-mode interface, configured to connect to a parent node of the plurality of nodes;
for each node of the network, configuring the second interface as control-mode left-hand interface, designed for connection to just one left-hand child node of the plurality of nodes;
for each node of the network, configuring the third interface as control-mode right-hand interface, designed for connection to just one right-hand child node of the plurality of nodes; and
sending beacon messages via the second interface and the third interface, each beacon message including information identifying the depth of the node in the network and of the right-hand or left-hand position of the respective interface,
wherein initially each non-gateway node performs an initialization procedure independent of the other nodes of the network and comprising the steps of:
seeking active channels of the network based on the received beacon messages;
connecting to a parent node of the emitter network based on the received beacon messages using the corresponding active channel;
seeking free channels in the network;
assigning a free channel to the second and/or the third interface to be used as its own communication channel via the second and/or the third interface.

2. The method according to claim 1, wherein the gateway node performs the steps of:
choosing a communication channel;
assigning an identifier address to own second and third interfaces including, respectively, information identifying zero depth and an identifier of a right-hand or left-hand position.

3. The method according to claim 2, wherein, before the step of choosing a communication channel, the gateway node performs the steps of: making a scan for detecting free/occupied channels; detecting a power associated to identified channels; and ordering said channels on the basis of said associated power, wherein the step of choosing a communication channel comprises choosing, among the identified channels, a channel with minimum power.

4. The method according to any of claims 1-3, wherein seeking free channels in the network by the at least one non-gateway node comprises the steps of:
scanning for detecting received beacon messages;
sending a request for authentication to an interface associated to the received beacon message;
and wherein, a positive response is received to the request for authentication by a left-hand interface or a right-hand interface of a parent node of said plurality of nodes, the at least one non-gateway node performs the steps of:
i) assigning an identifier address to its own first interface;
ii) choosing an own communication channel;
iii) calculating an own depth level; and
iv) assigning an identifier address to its own second and third interfaces, said addresses identifying the second and third interfaces including, respectively, said own depth level and an identifier of right-hand or left-hand position; and
v) performing the step of sending beacon messages.

5. The method according to claim 4, wherein the step of assigning an identifier address to said first interface comprises using said information identifying the depth of said parent node, said identifier of right-hand or left-hand position of said second or third interface of said parent node, and a first interface function identifier.

6. The method according to claim 5, wherein the step of assigning an identifier address to its own second and third interfaces comprises assigning the following address:
xx.yyy.{A|B}.C
where xx is a first fixed number,
yyy is correlated to a node identifier,
A is a second fixed number associated to the second interfaces of the nodes of the network and B is a third fixed number associated to the third interfaces of the nodes of the network;
C is a fourth fixed number indicating said control mode,
and the step of assigning an identifier address to said first interface comprises assigning the following address:
xx.zz.{D}.E
where zz is correlated to the identifier of the parent node,
D is equal to the second or third fixed number associated to the second or third interface of the parent node that is connected to the first interface of the non-gateway node, and
E is a fifth fixed number indicating said controlled mode.

7. The method according to any of claims 4-6, wherein the step of making a scan for detecting possible beacon messages comprises detecting a power associated to identified channels and the step of choosing an own communication channel comprises choosing a communication channel greater than the received beacon signal, associated to a detected power lower than a threshold value.

8. The method according to any of claims 4-7, comprising, in the case of receipt of a negative response to the request for authentication, repeating sending requests for authentication to further interfaces associated to received beacon messages until a positive response is received.

9. The method according to any of claims 4-8, comprising, after the step of making a scan for detecting possible beacon messages, ordering said beacon messages on the basis of the power associated to said messages and/or to the depth level indicated in the received beacon message.

10. The method according to claim 8, comprising, for each node of the network: configuring a fourth interface as backup interface, designed for connection to a plurality of children nodes in backup mode; sending backup beacon messages via the fourth interface, each backup beacon message including information identifying the depth of the node in the network and the respective backup function.

11. The method according to claim 10, comprising, in absence of positive responses to the request for authentication, sending a request for authentication to a backup interface associated to a received backup beacon message.

12. The method according to any of claims 4-11, comprising the steps of:
receiving a request for authentication from a further non-gateway node;
verifying whether one between its own second interface and third interface is free;
if so, associating said own free interface to said further non-gateway node and identifying said further non-gateway node as an own child node;
if not, refusing said request for authentication.

13. The method according to claim 12, comprising the steps of:
verifying the periodic reception of beacon messages coming from its own parent node;
if so, sending periodically said beacon messages with said own second and third interfaces;
if not, and in presence of at least one child node connected to at least one of said own third and fourth interfaces, sending disconnection messages to said at least one child node and activating said connection procedure again.

14. The method according to claim 1, wherein:
the step of assigning a free channel to the second and/or the third interface comprises choosing different frequency channels based on whether the non-gateway node is on the left-hand side or on the right-hand side of the network;
the gateway node makes a scan for detecting free/occupied channels, and orders the detected channels based on the detected power so that channels with minimum power are chosen;
the at least one non-gateway node, during the initialization procedure, makes a scan for detecting free/occupied channels, orders the detected channels based on detected power and/or the depth of the node that has assigned the detected channel, and assigns the free channel to the second and/or to the third interface by choosing the communication channels based on their order, the position of the non-gateway node on the left-hand or the right-hand side of the network, and so that the chosen channel is higher than the active channel of the parent node.

15. A node (2) for multichannel broad-band wireless network with hierarchical tree structure, comprising at least one first connection interface (2a), one second connection interface (2b1), and one third connection interface (2b2), configured for implementing the method for forming a multi-channel broadband wireless network with a hierarchical tree structure, according to any of the preceding claims.

16. The node according to claim 15, wherein said second and third interfaces (2b1, 2b2) are virtual interfaces of a same card.

17. The node according to claim 15 or 16, further comprising a fourth connection interface (2B3) configured for enabling an emergency connection to a plurality of first interfaces of other nodes of the network.

18. The node according to any of claims 15-17, comprising a fifth connection interface, configured for enabling provision of service to connected terminals.

19. A computer program product that can be loaded into a memory of a node for multi-channel broadband wireless network with a hierarchical tree structure and configured for implementing, when run, the method for forming a multi-channel broadband wireless network with a hierarchical tree structure according to any of claims 1 to 14.
